Europäisches Patentamt

European Patent Office

Office européen des brevets

(11) Publication number: **0 130 399**
A1

## (12) EUROPEAN PATENT APPLICATION

(21) Application number: **84106367.0**

(22) Date of filing: **04.06.84**

(51) Int. Cl.⁴: **G 11 B 7/24,** B 41 M 5/26

(30) Priority: **07.06.83 JP 100306/83**

(43) Date of publication of application: **09.01.85**
Bulletin 85/2

(84) Designated Contracting States: **DE FR NL**

(71) Applicant: **FUJI PHOTO FILM CO., LTD., 210 Nakanuma
Minami Ashigara-shi, Kanagawa 250-01 (JP)**

(72) Inventor: **Ochiai, Takeji, No. 210, Nakanuma, Minami
Ashigara-Shi Kanagawa (JP)**
Inventor: **Wada, Minoru, No. 210, Nakanuma, Minami
Ashigara-Shi Kanagawa (JP)**
Inventor: **Masuda, Toshiyuki, No. 210, Nakanuma,
Minami Ashigara-Shi Kanagawa (JP)**

(74) Representative: **Dr. E. Wiegand Dipl.-Ing. W. Niemann
Dr. M. Kohler Dipl.-Ing. J. Glaeser Dr. H.-R. Kressin
Patentanwälte, Herzog-Wilhelm-Strasse 16,
D-8000 München 2 (DE)**

(54) Information recording medium.

(57) An information recording medium is disclosed which comprises a transparent glass plate support (1) and a recording layer (4) of the kind which enables writing and reading of information by means of a laser beam, wherein a layer made up of an inorganic substance (2) and a layer made up of an organic polymeric substance (3) are additionally provided as the interlayer in a double or multiple layer form between the support and the recording layer.

# INFORMATION RECORDING MEDIUM

## FIELD OF THE INVENTION

The present invention relates to an information recording medium for writing and reading information by means of a laser beam and, more particularly, to a light information recording medium using a transparent glass plate support.

## BACKGROUND OF THE INVENTION

Recording media utilizing beams of high energy density, such as laser beams and the like, are known in the art. In such thermal recording media, the recording layers have high enough optical density to cause a local rise in temperature when they absorb an applied light beam, whereby a chemical or physical change is caused so as to bring about a change in optical characteristics in the locality irradiated with the light beam, thereby resulting in recording of the information.

The recording media of the above-described type have many advantages, in that they make it feasible to record a large amount of information in a small area thereof, to write and to read information at a high speed, to have a short access time, to provide records exhibiting excellent keeping quality upon long-range storage, and so on.

In general, recording in such a recording medium can be effected by scanning thereon a laser beam which has received amplitude modulation depending on an electric time series signal to which information to be recorded has been converted. In this case, there is the advantage that the recorded image is obtained by real time processing.

Recording layers of the above-described kind (heat mode recording layers) can be obtained by providing on a glass or transparent plastic support a metal of Bi, Sn, In, Te, etc., a semi-metal, a semi-conductor or so on in a thin layer form using an evaporation technique or the like, as described in U.S. Patents 4,188,214, 4,291,119, 4,069,487, 4,000,334 and 3,665,483.

In the course of handling and storing these recording media, it happens that scratches are generated on, or foreign substances like dust adhere to, the recording layer surfaces, which produce adverse effects on the reading of records. For the purpose of obviating this defect, sandwich type (overall adhesion type) or air-sandwich type of information recording media have been employed (Canadian Patent 1,029,130 and U.S. Patent 4,074,282.)

As for the support materials, plastics such as polymethylmethacrylate and the like, though they are superior to other conventional plastics in workability, handling facility, production cost, etc., have problems of liability to scratching and further, inferiority in dimensional stability and surface properties. Therefore, in view of these problems, glass plate supports are preferred to the plastic ones. However, glass plate supports suffer from the defects that they are inferior in adhesiveness to recording layers, they are easily cracked, they have thermal conductivities greater than plastics by a factor of 10 to lower the sensitivity of a recording layer provided thereon, and their long-time use or storage brings about deterioration of recording characteristics through the migration of ions, such as $K^+$, $Na^+$, $Ca^{2+}$, $Mg^{2+}$, $Ba^{2+}$, $Al^{3+}$. etc., from the glass support into the recording layer.

On the other hand, light information recording media in which an interlayer made up of an organic high polymer is provided between the respective support and recording layer are known, for example, from Japanese Patent Applications (OPI) Nos. 57495/80 and 138066/82.

Therein, each of the interlayers is provided with the intention of heightening the recording sensitivity by taking advantage of the heat-insulating function inherent to organic high polymers.

In addition, to provide interlayers of inorganic substances on plastic supports is known from Japanese Patent Applications (OPI) Nos. 172538/82 and 172539/82.

Each of those interlayers is provided for the purpose of increasing adhesiveness between the recording layer and the support, and preventing the invasion of oxygen and moisture in the air. Arbitrary application of the above-described interlayers to glass plate support has insufficient effects upon the obviation of the foregoing defects caused in the case of using a glass plate support.

### SUMMARY OF THE INVENTION

Therefore, an object of the present invention is to provide an interlayer which enables the obviation of the above-described defects in light information recording media of the type which use glass as their supports. Thus, not only can improvement be made in adhesiveness between a glass support and a recording layer to be provided thereon, but the deterioration of record-keeping quality due to ions migrating out of the glass support during long-term use or storage can be prevented and the sensitivity and the signal to noise ratio of the recording layer can be improved.

That is, the present invention provides an information recording medium which comprises a transparent glass plate support having provided thereon, in sequence, an interlayer and a recording layer which makes it feasible to write and read information using a laser beam, the interlayer comprising a layer made up of an inorganic substance and a layer made up of an organic polymeric substance.

## BRIEF DESCRIPTION OF DRAWINGS

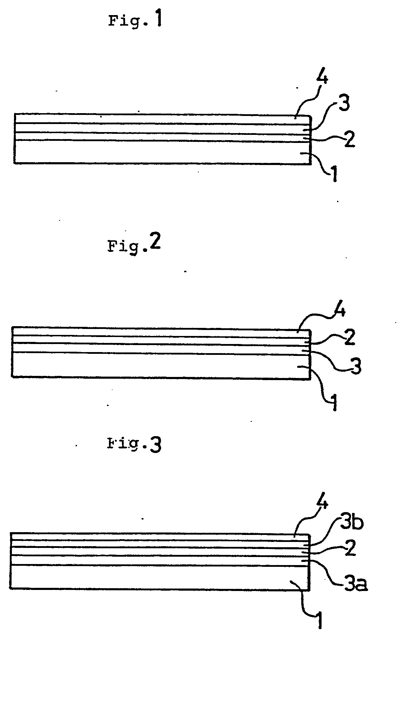

Figures 1 to 3 are illustrative diagrams of layer structures showing embodiments of the present invention respectively, wherein symbol 1 designates a glass plate support, symbol 2 an inorganic substance layer, symbols 3, 3a and 3b organic polymeric substance layers respectively, and symbol 4 a recording layer.

## DETAILED DESCRIPTION OF THE INVENTION

In the present invention, a disc-form of transparent glass plate support is employed. Examples of glass include silicate glass (e.g., silicate glass, quartz glass, aluminosilicate glass, invert glass, etc.), borate glass, phosphate glass, germanate glass, tellurite glass, vanadate glass and aluminate glass. The thickness of the glass plate support is generally from about 1.0 to 1.5 mm.

On such a glass plate support are provided a layer made up of an inorganic substance and a layer made up of an organic polymeric substance as the interlayer in the present invention. The interlayer may have either a double layer structure or a multilayer structure. However, the interlayer preferably has a double layer structure or a triple layer structure in consideration of the thickness and cost of the interlayer as a whole. The interlayer has no particular restriction in the order of arrangement, but it is preferred that the inorganic substance layer be positioned closer to the glass plate support as shown in Figure 1 because the inorganic substance layer effectively prevents the migration of alkalis from the glass plate support and the organic polymeric layer effectively minimizes the decrease in recording sensitivity of the recording layer due to its low thermal conductivity. The inorganic substance layer and the organic polymeric layer, each may also have a multilayer structure if desired. In particular, the inorganic substance layer composed of two thin layers is preferably formed instead of one thick inorganic substance layer because the former has higher density so that the migration of alkalis can be effectively prevented.

Figures 1 to 3 are illustrative diagrams of layer structures which demonstrate respective embodiments of the present invention.

Figure 1 is an example illustrating the case that an interlayer having such a double layer structure as to involve a layer made up of an inorganic substance as the lower layer is provided, wherein on a transparent glass plate support 1 are provided an inorganic substance layer 2 and an organic polymeric substance layer 3, in this order, and further thereon is provided the recording layer 4.

In an example demonstrated by Figure 2, an organic polymeric substance layer 3 and an inorganic substance layer 2 are provided in sequence on a transparent glass plate support 1, and on the inorganic substance layer is further provided a recording layer 4.

On the other hand, Figure 3 is an example illustrating the case that an interlayer has a triple layer structure, wherein a glass plate support 1 has thereon in sequence a layer 3a made up of an organic polymeric substance, a layer 2 made up of an inorganic substance and a layer 3b made up of an organic macromolecular substance which may be either the same as or different from that of the layer 3a and further, a recording layer 4 is provided as the uppermost layer.

Suitable examples of substances which can constitute the inorganic substance layer of the present invention include oxides or nitrides of such elements as Zn, Mg, Aℓ, Si, Zr, Ce, In, Ti, Ge, Ni, Nb, Cr, etc., and fluorides of metals such as Mg, Ca, Ce, etc. Among these, $Aℓ_2O_3$, SiO, $SiO_2$, $MgF_2$, NiO, $TiO_2$, MgO and $Si_3N_4$ are preferably used. Of all the substances, $SiO_2$ and $Si_3N_4$ produce the most beneficial effects. The thickness of the inorganic substance layer ranges from 50 Å to 5 μm, and is preferably 1,000 Å or thicker, and especially effectively from 1,500 Å to 1 μm. The foregoing inorganic substances are provided as a layer having the above-described range of thickness by using an evaporation technique, a sputtering technique, an ion plating technique or so on. In particular, the layer formed by using a sputtering technique has a great effect upon the keeping quality of the recording layer. In addition, water glass can be used as the inorganic substance. In this case, the inorganic substance layer can be provided using a coating technique, such as a spin coating technique, a bar coating technique, a screen printing technique, etc.

Suitable examples of organic polymeric substances which can constitute the organic polymeric substance layer of the present invention include various kinds of polymers such as polymethylmethacrylate, acrylic acid-methylmethacrylate copolymers, styrene-maleic anhydride copolymers, polyvinyl alcohol, poly-N-methylolacrylamide, styrenesulfonic acid copolymers, styrene-vinyltoluene copolymers, chlorinated polyethylene, chlorosulfonated polyethylene, nitrocellulose, polyvinyl chloride, polyester, polyimide, vinyl acetate-vinyl chloride copolymers, ethylene-vinyl acetate copolymers, polyethylene, polypropylene, polycarbonate, epoxy resins, acetyl cellulose, tetrafluoroethylene-perfluoroalkyl vinyl ether copolymers, tetra-fluoroethylene-hexafluoropropylene copolymers, tetra-fluoroethylene-ethylene copolymers, trifluorochloroethylene-ethylene copolymeres, tetrafluoroethylene-trifluorochloroethylene copolymers, vinylidene fluoride resins, vinyl fluoride resins, polybutene, nylons, and so on. Of these, polymers having low thermal conductivity are preferred.

Further, melting point of the polymers is preferably low as long as other properties such as adhesiveness are not deteriorated.  Preferred examples of the polymers include polymethylmethacrylate, styrene-vinyltoluene copolymers, chlorinated polyethylene, nitrocellulose, ethylenevinylacetate copolymers, epoxy resins and tetrafluoroethylene-ethylene copolymers.  The polymers used in the invention generally have a molecular weight of from 50 to 300,000 and preferably from 100 to 100,000, but the preferred molecular weight varies depending upon the kind of polymers, for example, it is from 10,000 to 300,000 for polymethylmethacrylate, from 500 to 30,000 for styrene-vinyltoluene copolymers, and from 10,000 to 300,000 for ethylene-vinyl acetate copolymers.

These polymers are formed in a layer having a thickness ranging from 0.01 to 10 µm, especially from 0.1 to 4 µm, by being dissolved or dispersed in a proper solvent and coated using such a coating process as a spin coating process, a dip coating process, an extrusion coating process, a bar coating process, a screen printing process or the like.  Example of the solvent include acetone, methyl ethyl ketone, methyl isobutyl ketone, diacetone alcohol, methyl cellosolve, ethyl cellosolve, butyl cellosolve, methyl cellosolve acetate, ethyl cellosolve acetate, butyl cellosolve acetate, hexane, cyclohexane, ethylene chloride, methylene chloride, benzene, chlorobenzene, methanol, ethanol, propanol, isopropyl alcohol, butanol, petroleum ethers, dimethylformamide, a thinner, and so on. The polymer layer may also be formed by an evaporation technique or a sputtering technique.

On the inorganic substance layer or the organic polymeric layer provided as the interlayer in the above-described manner, a recording layer is provided subsequently.

The recording layer does not have any particular restriction on its constituent material, and may be constituted with any material that has been employed in the art, for example, a metal such as Te, Zn, In, Sn, Zr, Aℓ, Cu, Ga, etc.; a semi-metal such as Bi, As, Sb, etc.; a semi-conductor such as Ge, Si, etc.; or an alloy or a combination of two or more of the above-described elements. These materials are described, for example, in U.S. Patents 4,188,214, 4,291,119, 4,237,468, 4,415,650, 4,271,256 and 4,388,400. In providing the recording layer using such a material as described above on the interlayer provided on the foregoing described support, an evaporation technique, a sputtering technique, an ion plating technique or the like is employed advantageously. A thickness ranging from 100 Å to 1,500 Å is well suited for the recording layer from the standpoint of ensuring the optical density required of light information recording.

The present invention can be applied to not only light information recording media of single plate type but also those of sandwich or air-sandwich type. A specific description of air-sandwich type recording media is given below. A recording medium of the air-sandwich type is obtained by sticking together two sheets of the recording element produced in the above-described manner through a spacer in such a condition that their recording layers face inside. Therein, the recording layer may be provided on both or either of the two support. In the latter case, a spacer is united with the foregoing described interlayer and thereby, adhesiveness between the spacer and the support plate can be improved.

Particularly preferred layer structures of the information recording medium of the present invention are shown below:

    i)    Glass plate support/Inorganic substance layer of $SiO_2$/Organic polymeric layer of polymethylmethacrylate/Recording layer;

    ii)    Glass plate support/Inorganic substance layer of $Si_3N_4$/Organic polymeric layer of nitrocellulose/Recording layer;

    iii)    Glass plate support/Organic polymeric layer of an epoxy resin/Inorganic substance layer of $Cr_2O_3$/Organic polymeric layer of polymethyl- methacrylate/Recording layer; and

iv)    Glass plate support/1st    Inorganic substance layer of $SiO_2$/2nd    Inorganic substance layer of $SiO_2$/1st    Organic polymeric layer of poly-methylmethacrylate/2nd    Organic polymeric layer of nitrocellulose/Recording layer.

In accordance with the embodiment that an inorganic substance layer and an organic polymeric layer are employed in combination as the interlayer, not only is the keeping quality of the recording layer attained high enough so  that this result could not be reached by the independent use of these layers, but also an information recording medium excellent in (1) adhesiveness between the recording layer and glass plate support, (2) recording speed, and (3) signal to noise ratio, is obtained.

<div align="center">EXAMPLE</div>

Recording media having various layer structures as shown in the table below were prepared, and their characteristics were measured by the following evaluation methods.  The results are shown in the table.

Evaluation method

Laser output required for recording (mW):

The pulse exposure recording was performed from the side of the glass plate support using an argon ion laser beam (wavelength 5145 Å) having a maximum output level of 2W. The beam was converged to a beam diameter of 2.5 μm by a lense. The pulse exposure time was 100 nsec. The minimum laser output strength by which the memory trace was formed on each sample was measured. Namely, the smaller the output, the higher the sensitivity.

Adhesive force:

On the recording layer were made rifts by drawing parallel lines at intervals of 1 mm vertically and horizontally drawn on the recording layer in a depth sufficient to reach the glass plate support by a steel knife, to make 100 measures having the area of 1 mm x 1 mm. After sticking a mylar tape (polyethylene terephthalate pressure-sensitive adhesive tape No. 31B, manufactured by Nitto Electric Industrial Co., Ltd.) on the above recording layer, the adhesive force was evaluated by determining the number of 1 mm x 1 mm measures which remained when the mylar type was strongly stripped off in the upper direction of 90°. The larger the number of strips of recording layer remaining, the better the adhesive force.

Keeping quality of the recording layer:

Each sample was allowed to stand for 30 days at 60°C and 90% relative humidity (RH) and thereafter the number of crystallites separating out within the area of a 4 inch square on its recording layer surfaces was counted by observing the recording layer surface by means of an optical microscope of 200 magnification. Further, the condition of the recording layer surface was observed by the naked eye. In Table shown below, A indicates that separation of crystallites was not observed at all by the microscope, and that generation of turbidity was not observed by the naked eye, while B indicates that the number of crystallites separating out was 11 or more, and that generation of turbidity was observed by the naked eye.

Table

| Samples | Support | Layer Structure | | | | Keeping Quality | Laser Output (mW) | Adhesiveness |
|---|---|---|---|---|---|---|---|---|
| | | 1st Layer | 2nd Layer | 3rd Layer | 4th Layer | | | |
| 1 | Glass | Inorganic Layer ($SiO_2$) 2,000 Å | Recording Layer | | | B | more than 20 | 90/100 |
| 2 | Glass | Organic Polymeric Layer (PMMA) 2,500 Å | Recording Layer | | | B | 11 | 90/100 |
| 3 (Fig.1) | Glass | Inorganic Layer ($SiO_2$) 2,000 Å | Organic Polymeric Layer (PMMA) 2,500 Å | Recording Layer | | A | 11 | 100/100 |
| 4 (Fig.2) | Glass | Organic Polymeric Layer (PMMA) 2,500 Å | Inorganic Layer ($CaF_2$) 2,000Å | Recording Layer | | A | 14 | 90/100 |
| 5 (Fig.3) | Glass | Organic Polymeric Layer (Epoxy Resin) 2,500 Å | Inorganic Layer ($Cr_2O_3$) 500 Å | Organic High Polymer Layer (PMMA) 2,500 Å | Recording Layer | A | 11 | 100/100 |

Note: (1) Recording layer is constructed of a metal layer (In: 250 Å: lower layer) and a compound layer (GeS: 200 Å: upper layer).

(2) PMMA: Polymethylmethacrylate

The results set forth in Table   demonstrate that the layer structures of the present invention (Sample Nos. 3-5) are very effective in improving record-keeping quality and in reduction of laser output required for recording.

While the invention has been described in detail and with reference to specific embodiment thereof, it will be apparent to one skilled in the art that various changes and modifications can be made therein without departing from the spirit and scope thereof.

WHAT IS CLAIMED IS:

1.      An information recording medium comprising a transparent glass plate support having provided thereon, in sequence, an interlayer and a recording layer which is capable of writing and reading information using a laser beam, said interlayer comprising a layer composed of an inorganic substance and a layer composed of an organic polymeric substance.

2.      An information recording medium as in claim 1, wherein said inorganic substance layer is provided in contact with the glass plate support.

3.      An information recording medium as in claim 1, wherein said organic polymeric substance layer is provided in contact with the glass plate support.

4.      An information recording medium as in claim 1, wherein said inorganic substance layer is composed of at least one member selected from the group consisting of $Al_2O_3$, SiO, $SiO_2$, $MgF_2$, NiO, $TiO_2$, MgO and $Si_3N_4$.

5.      An information recording medium as in claim 4, wherein said inorganic substance layer has a thickness of 1,000 Å or more.

6.      An information recording medium as in claim 4, wherein said inorganic substance layer is provided using a sputtering technique.

7.      An information recording medium as in claim 1, wherein said glass plate support is in a disc-form and has a thickness of from about 1.0 to 1.5 mm.

8. An information recording medium as in claim 4, wherein said inorganic substance layer is composed of $SiO_2$ or $Si_3N_4$.

9. An information recording medium as in claim 4, wherein said inorganic substance layer has a thickness of from 1,500 Å to 1 μm.

10. An information recording medium as in claim 1, wherein said inorganic substance layer is composed of water glass.

11. An information recording medium as in claim 1, wherein said organic polymeric substance layer has a thickness of from 0.01 μm to 10 μm.

12. An information recording medium as in claim 1, wherein said organic polymeric substance layer has a thickness of from 0.1 μm to 4 μm.

13. An information recording medium as in claim 2, wherein said organic polymeric substance layer has a thickness of from 0.01 μm to 10 μm.

14. An information recording medium as in claim 2, wherein said organic polymeric substance layer has a thickness of from 0.1 μm to 4 μm.

15. An information recording medium as in claim 3, wherein said organic polymeric substance layer has a thickness of from 0.01 µm to 10 µm.

16.     An information recording medium as in claim 3, wherein said organic polymeric substance layer has a thickness of from 0.1 µm to 4 µm.

0130399

1/1

Fig.1

Fig.2

Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | EP-A-0 046 413 (HITACHI) <br> * Page 2, lines 16-22; page 9, lines 8-17 * | 1,2,6 | G 11 B 7/24 <br> B 41 M 5/26 |
| X | EP-A-0 042 307 (EASTMAN KODAK) <br> * Page 23, lines 23-35; figure 4 * | 1,2 | |
| A | DE-A-3 203 599 (TOKYO SHIBAURA) <br> * Page 10, lines 29-32 * | 4 | |
| A | EP-A-0 058 496 (MINNESOTA MINING AND MANUFACTURING CO.) <br> * Page 5, lines 1-20; figure 1 * | 1 | |
| A | EP-A-0 051 283 (DISCOVISION ASSOCIATES) <br> * Page 7, line 19 - page 9, line 15 * | 1 | TECHNICAL FIELDS SEARCHED (Int. Cl. ³) <br><br> G 11 B 7/24 <br> B 41 M 5/00 |

The present search report has been drawn up for all claims

| Place of search <br> BERLIN | Date of completion of the search <br> 04-09-1984 | Examiner <br> ROGNONI M.G.L. |
|---|---|---|